(19)

**Europäisches Patentamt**

**European Patent Office**

**Office européen des brevets**

(11) **EP 4 624 831 A1**

(12) **EUROPEAN PATENT APPLICATION**

(43) Date of publication:
**01.10.2025  Bulletin 2025/40**

(21) Application number: **24166513.2**

(22) Date of filing: **26.03.2024**

(51) International Patent Classification (IPC):
**F25B 49/00** $^{(2006.01)}$        **F25B 49/02** $^{(2006.01)}$

(52) Cooperative Patent Classification (CPC):
**F25B 49/005; F25B 49/02;** F25B 41/006;
F25B 2400/06; F25B 2500/19; F25B 2500/222;
F25B 2600/2513; F25B 2700/1933; F25B 2700/195;
F25B 2700/21151; F25B 2700/21162;
F25B 2700/21163

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Vertiv S.r.l.**
**35028 Piove di Sacco, (PD) (IT)**

(72) Inventors:
• **BARBATO, Pierpaolo**
  **Noventa Padovana (PD) (IT)**
• **TAKACS, Balint**
  **Galanta (SK)**
• **PEREJDA, Jan**
  **Cachtice (SK)**

(74) Representative: **Beal, James Michael et al**
**Kilburn & Strode LLP**
**Lacon London**
**84 Theobalds Road**
**London WC1X 8NL (GB)**

(54)    **INDIRECT REFRIGERANT LEAK DETECTION**

(57)    A method for detecting a leak in a cooling system comprising a plurality of cooling units (100), a control device (220) and a cooling system are provided. The method comprises adjusting operation of a first cooling unit (100-a) of the plurality of cooling units. The method further comprises, while the first cooling unit is operating according to the adjusted operation, determining at least one parameter of the first cooling unit and operating at least one other cooling unit of the plurality of cooling units to compensate for the adjusted operation of the first cooling unit. The method further comprises comparing the at least one parameter to a reference value.

**EP 4 624 831 A1**

**Description**

This disclosure relates to a method for detecting a leak in a cooling system, a control device and a cooling system.

Background

In a data centre, servers and other computational equipment can generate a large amount of heat, and typically need to be cooled to prevent overheating. This is important because many industries rely on data centres to operate reliably at all times without interruption. For example, data centres can serve as part of the critical infrastructure of airports, banks and hospitals, for which even short interruptions are unacceptable. As such, it is necessary for a data centre to maintain efficiency, guarantee data integrity and uphold the trust of customers through providing continuous operation. In data centres, as well as other settings, a cooling system can remove excess heat from their air in order to cool the air. This helps regulate the environment in which the servers are housed and therefore helps maintain their continuous, efficient operation.

In order to guard against faults and ensure that a data centre operates continuously, a data centre may include a number of redundant components, for example multiple power distribution units, power sources, cooling delivery units, etc. This redundancy can act as a buffer in case of a planned/unplanned repair to one of the components. As such, a cooling system may comprise multiple cooling units. This further enables uninterrupted operation of the data centre.

One fault that may lead to operation of a cooling unit being interrupted or reduced in effectiveness is a leak of refrigerant from the cooling unit. For example, this may be due to welding imperfections, material fatigue due to mechanical stress (vibration), mechanical or chemical damage to the refrigerant circuit and/or damage to a gasket caused by heat fluctuations.

A refrigerant leak is undesirable for several reasons. Refrigerant is expensive and a cooling unit requires a certain amount of refrigerant to operate correctly, such that it is desirable to avoid the need to replace lost refrigerant. In addition, loss of refrigerant may have a negative impact on components of a cooling unit such as the compressor, such that it may lead to a need for replacing or repairing such components. Moreover, use of a lower amount of refrigerant increases the energy efficiency ratio (EER) of a cooling unit. For substantial leaks, the cooling unit will lose its capability to function properly and would not be able to provide the cooling for which it was designed, which could introduce unwanted downtime in the data centre. A service call to repair/refill the cooling unit would lead to additional downtime. In addition, lost refrigerants have a non-zero global warming potential (GWP), such that undetected leaks introduce more greenhouse gases into the atmosphere and degrade the sustainability of a data centre. Refrigerants may be flammable such that a leak may also lead to safety issues.

Leak detection can be performed in a direct or an indirect manner. Direct leak detection is typically performed using specially manufactured and calibrated sensors (referred to as 'sniffers'), which can detect the presence of refrigerant in the air. However, there are a number of problems with such sniffers. They are only able to work properly in closed spaces in which air movement is minimal and are not suitable for application to external/outdoor environments (where condensers or whole units like chillers may be located). Even if there is a leak in connecting lines between indoor and outdoor units, sniffers would not be able to detect this. They are only able to detect a leak if it happens relatively close to the sniffer. In addition, a sniffer is not able to identify which cooling unit or circuit is leaking, only that there is refrigerant leaking from somewhere. Moreover, sniffers are expensive and require periodic calibration and replacement.

Indirect leak detection can be performed by measuring unusual system performance of a cooling unit. However, it may be difficult to determine whether the performance of the cooling unit is 'unusual' based on the measurements. It may also be necessary to alter how the cooling unit is operating in order to make meaningful comparisons and conclusions regarding this. This will typically lead to the cooling provided by the cooling unit being altered, leading to unwanted impacts on the operation of the computational equipment of the data centre. As such, there is a trade-off between continuing to operate a cooling unit to provide the desired cooling and performing leak detection or maintenance on the cooling unit.

It would be desirable to enable faster detection of a refrigerant leak before the operation of a cooling unit is degraded significantly leading to unwanted downtime. It would also be desirable to more reliably determine which cooling unit is leaking in order to further increase the speed of detecting the specific location of the leak and to avoid the need to turn off multiple cooling units to examine each of them. It would also be desirable to enable more accurate detection of leaks without negatively affecting operation of cooled components. Therefore, it would be desirable to provide more reliable cooling using a cooling system.

The present invention seeks to address these and other disadvantages encountered in the prior art.

Summary

An invention is set out in the independent claims.

According to an aspect, there is provided a method for detecting a leak in a cooling system comprising a plurality of cooling units, the method comprising: adjusting operation of a first cooling unit of the plurality of cooling units; while the first cooling unit is operating according to the adjusted operation: determining at least one parameter of the first cooling unit; and operating at least one other cooling unit of the plurality of cooling units to compensate for the adjusted operation of the first cooling unit; and comparing the at least one parameter to a reference value.

According to a further aspect, there is provided a control device comprising a processor and a memory storing computer-executable instructions, the instructions when executed causing the processor to perform the above-mentioned method.

According to a further aspect, there is provided a cooling system comprising: the above-mentioned control device and the above-mentioned plurality of cooling units.

Brief Description of the Drawings

Specific embodiments are now described, by way of example only, with reference to the drawings, in which:

Figure 1 depicts an example cooling unit according to the present disclosure;
Figure 2 depicts an example cooling system according to the present disclosure;
Figure 3 depicts an example method for detecting a leak according to the present disclosure;
Figure 4 depicts a further example cooling unit according to the present disclosure;
Figure 5 depicts a further example cooling unit according to the present disclosure;
Figure 6 depicts a further example cooling unit according to the present disclosure;
Figures 7a and 7b depict a sight glass according to the present disclosure;
Figure 8 depicts a further example cooling unit according to the present disclosure;
Figure 9 depicts a further example cooling unit according to the present disclosure;
Figure 10 depicts an example computing device according to the present disclosure.

Detailed Description

The present disclosure provides techniques for detecting a leak in a cooling system comprising a plurality of cooling units. The operation of a first cooling unit of the plurality of cooling units is adjusted. While the first cooling unit is operating in this adjusted manner, at least one parameter of the first cooling unit is determined. Also, while the first cooling unit is operating in this adjusted manner, one or more other cooling units of the plurality of cooling units is operated to compensate for the adjusted operation of the first cooling unit. The at least one parameter is compared to a reference value. Differences between the at least one parameter and the reference value can indicate the presence of a leak.

These techniques provide a non-invasive way of determining whether a cooling unit is leaking. These techniques enable a determination of which cooling unit has suffered a leak (i.e., the cooling unit for which the at least one parameter is determined). In addition, since the determination is made by comparison of the at least one parameter to a reference value, the leak detection can be performed in a quantified, accurate manner. Moreover, since the remaining cooling units of the cooling system can cover the required cooling capacity as a group, the impact on cooled components, such as servers in a data centre, is negligible. As such, the techniques of the present disclosure enable more reliable and more efficient use of cooling units through providing improved leak detection without degrading the cooling capacity provided at any particular instant.

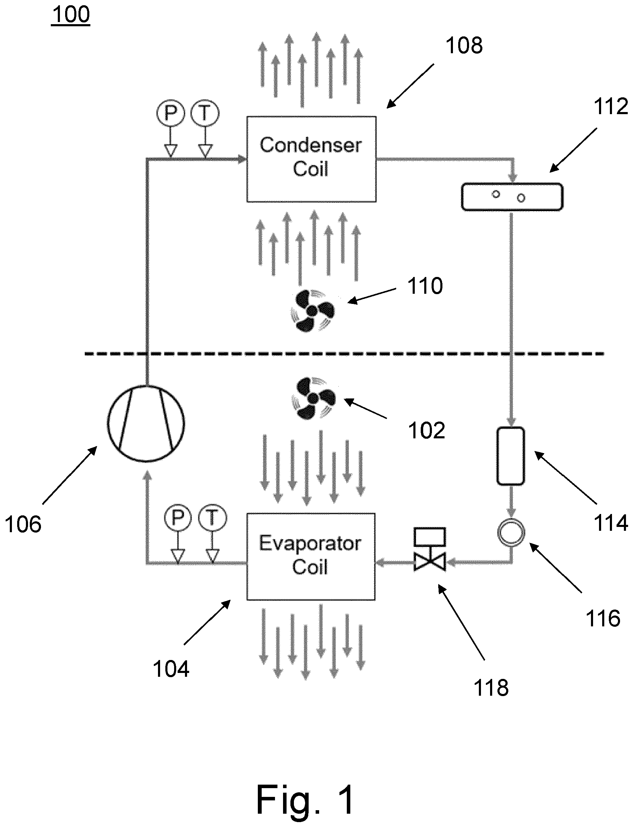

Figure 1 depicts an example of a cooling unit 100 according to the present disclosure. A cooling unit (which may also be referred to as a cooling delivery unit) is configured to absorb heat from a given space (for example as generated by servers) and transfer it outside of the space, for example to an outside environment where the heat is released. The techniques of the present disclosure are applicable to all cooling units and cooling systems. The cooling unit 100 of Figure 1 may be an air handling unit with one circuit, for ease of explanation, though the techniques of the present disclosure are not limited thereto.

The cooling unit 100 may be divided into two parts, which may be referred to as an air circuit and a refrigerant circuit respectively. The air circuit is configured to move hot air by sucking the hot air from the servers into the cooling unit 100 and supplying the same air with a lower temperature back to the servers. This may be performed using fans. The air is represented in Figure 1 using the series of adjacent, vertical arrows pointing upwards and downwards. In Figure 1, refrigerant is passed in a generally clockwise direction in one or more pipes or conduits represented using a series of consecutive arrows arranged in a ring/rectangle. This may be referred to as the refrigerant circuit. The refrigerant circuit is configured to circulate refrigerant to cool down the air of the air circuit. The refrigerant used in the refrigerant circuit may be water, a water-glycol mixture, fluorinated gases (F-gases) or natural gases such as carbon dioxide or propane. As would be understood by the skilled person, the refrigerant may be a mixture of gases such as R410A or R1234ze. Phase changing refrigerants will be focused on below for ease of understanding, though the present disclosure is not limited thereto.

The refrigerant circuit is a closed circuit in which the same refrigerant circulates while it changes its physical properties such as pressure, temperature and state (liquid or gas). An evaporator fan 102 is configured to move hot air from one or more servers and their surroundings to the evaporator coil 104 (also referred to herein as an evaporator). The hot air passes across the evaporator 104 and is cooled down as the refrigerant absorbs the heat. This occurs without mixing of the air and the refrigerant. The cooler air can then be recirculated to the one or more servers to absorb further heat.

During the heat absorption, the state of the refrigerant changes from liquid to gas. Subsequently, this refrigerant gas may be sucked into the compressor 106. The compressor is configured to increase the pressure of the refrigerant and transfer it to the condenser coil 108 (also referred to as a condenser herein). A condenser fan 110 is configured to circulate cool air across the condenser 108 in order to cool down the refrigerant until it condensates (changes state from gas to liquid). The liquid refrigerant is then fed back towards the evaporator 104.

Between the condenser 108 and the evaporator 104, the liquid refrigerant may pass through a receiver 112. The receiver 112 is configured to act as a refrigerant buffer, i.e. a storage tank for refrigerant. This may provide more flexibility in the amount of refrigerant supplied through providing a means for holding excess refrigerant. The amount of refrigerant needed is dependent on the predicted working condition of the cooling unit 100, for example including the suction and the condensing pressure. The quantity of refrigerant needed is also dependent on the value of subcooling. If the cooling unit 100 comprises a smaller amount of refrigerant, lower subcooling will result. The cooling unit 100 should comprise enough refrigerant such that it can deliver the cooling capacity requested, but it is undesirable to include too much refrigerant due to its high cost.

The refrigerant may also pass through a filter 114. The liquid refrigerant may also pass through a sight glass 116. The sight glass 116 comprises a transparent window enabling the refrigerant to be visibly inspected. The refrigerant may also pass through an expansion valve 118, such as an electronic expansion valve (EEV), configured to control the amount of refrigerant that flows back into the evaporator 104.

As referred to above, the properties of the refrigerant change at different points in its movement around the refrigerant circuit. In the evaporator 104, heat is absorbed by the refrigerant, and it evaporates as a result. In the compressor 106, the pressure of the refrigerant is increased and, due to the mechanical work of the compressor, the enthalpy of the refrigerant is also increased. In the condenser 108, condensation of the refrigerant occurs as the enthalpy of the refrigerant is decreased. Finally, in the expansion valve 118, the pressure of the refrigerant is decreased. This cycle repeats as the refrigerant moves around the refrigerant circuit further times.

The cooling unit 100 may comprise one or more pressure sensors (indicated 'P' in Figure 1) or temperature sensors (indicated 'T') in Figure 1 at different points of the refrigerant circuit. These may be configured to determine and communicate the pressure/temperature of the refrigerant at the respective points of the refrigerant circuit.

If the refrigerant circuit is perfectly hermetically sealed, there is no need to refill the refrigerant. However, in practice, refrigerant can leak due to one or more imperfections or damage to the cooling unit 100 via mechanical fatigue or mechanical or chemical damage or heat fluctuation, as described above. The present disclosure provides improved means for detecting a leak in a non-invasive, fast and non-disruptive manner.

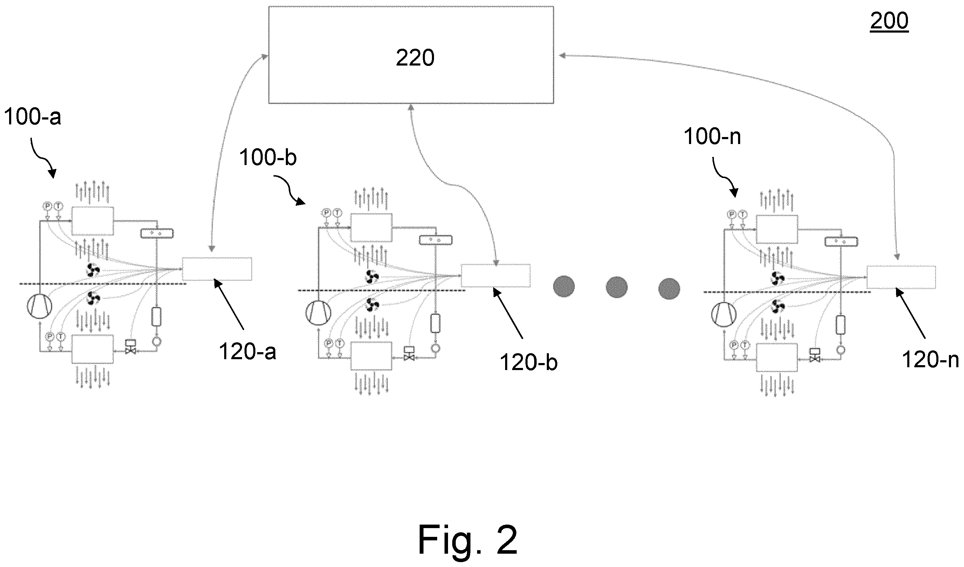

Figure 2 depicts an example cooling system 200 according to the present disclosure. The cooling system 200 comprises a plurality of cooling units 100-a, 100-b, ... , 100-n. In other words, the cooling system comprises n cooling units, n being an integer. Each of the cooling units 100-a, 100-b, ... , 100-n may correspond to the cooling unit 100 of Figure 1, and the reference numeral 100 is used collectively to refer to the cooling units 100-a, 100-b, ... , 100-n.

Each of the cooling units 100-a, 100-b, ... , 100-n may comprise a respective cooling unit controller 120-a, 120-b, ... , 120-n. The reference numeral 120 is used collectively to refer to the cooling unit controllers 120-a, 120-b, ... , 120-n. The cooling unit controllers 120 may be referred to as control devices or local controllers herein. Each of the cooling unit controllers 120-a, 120-b, ... , 120-n may be communicatively coupled to one, multiple or all of the components of the respective cooling unit 100. Each cooling unit controller 120 may be configured to transmit control signals to respective components of the respective cooling unit 100, in order to adjust the operation of the respective cooling unit. Alternatively, or in addition, each cooling unit controller 120 may be configured to receive data from respective components of the respective cooling unit 100. The data may comprise a parameter of the cooling unit 100 describing the state of components of the cooling unit 100 or physical parameters of the refrigerant or air of the cooling unit 100. Alternatively, or in addition, the data may comprise information enabling calculation or determination of such a parameter, for example as performed by the respective cooling unit controller 120.

The cooling system 200 may comprise a cooling system controller 220. The cooling system controller 220 may be referred to as a control device or global controller or supervisory system herein. The cooling system controller 220 may be communicatively coupled to each of the cooling units 100. For example, the cooling system controller 200 may be communicatively coupled to each of the cooling unit controllers 120. For example, this may comprise the cooling system controller 220 transmitting the control signals described above and/or receiving the data described above. The cooling system controller 220 may perform the calculation or determination of a parameter as described above.

The use of a cooling system 200 comprising a plurality of cooling units 100 is advantageous as it provides redundancy in case of a fault or reduced/halted operation of a particular one of the cooling units 100. This enables reduced downtime and a higher level of reliability of the cooling system 200 and of the data centre it is configured to cool.

The use of a cooling system controller 220 communicatively coupled to each of the cooling units 100 enables prevention of individual cooling units 100 from operating in a conflicting manner (e.g. with one of the units humidifying the air while another is dehumidifying the air), in particular when the cooling units 100 are in the same room. Such coordinated (or 'teamwork') operation of the plurality of cooling units 100 can save electrical energy and reduce potential control instability issues (e.g. activation/deactivation of individual cooling units 100). In such coordinated operation, the total cooling load required can be distributed across the cooling units 100, which may enable more stable and reliable operation from a control quality perspective.

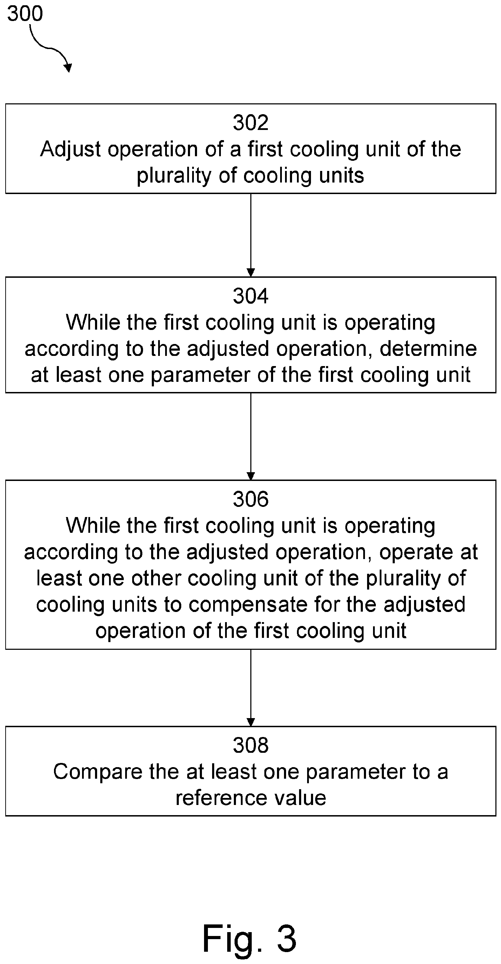

Figure 3 depicts an example method 300 for detecting a leak in a cooling system comprising a plurality of cooling units according to the present disclosure. The method 300 may be performed using any one or more of the cooling units 100, cooling system 200, cooling unit controllers 120 and cooling system controller 220 described above.

In a step 302, the method may comprise adjusting operation of a first cooling unit 100 of the plurality of cooling units.

In a step 304, the method may comprise, while the first cooling unit 100 is operating according to the adjusted operation, determining at least one parameter of the first cooling unit 100.

In a step 306, the method may comprise, while the first cooling unit 100 is operating according to the adjusted operation, operating at least one other cooling unit of the plurality of cooling units to compensate for the adjusted operation of the first cooling unit 100.

In a step 308, the method may comprise comparing the at least one parameter to a reference value.

Additional details which may be included in or combined with method 300 are set out below. It will be appreciated that references to a/the cooling unit 100 below may be used to refer to the first cooling unit 100 described above, or to any other cooling unit 100 of the plurality of cooling units 100. The steps described below may be performed by the cooling unit controller 120 of the cooling unit 100 being considered, or by the cooling system controller 220.

Referring to the comparing of the at least one parameter to a reference value, as set out in step 308 above, the reference value may be determined through a baseline procedure (which may also be referred to as a baseline creation process). This baseline procedure may be used to define normal or standard operating conditions of a cooling unit 100, i.e., operating conditions for a predefined mode of operation in the absence of a leak. This baseline procedure may be performed once for each cooling unit 100, or on a periodic basis for each cooling unit 100, or may be performed soon before major maintenance is performed on the relevant cooling unit 100.

Typically, cooling units 100 in a data centre may operate at 50-80% of their nominal capacity. A check may be performed that a cooling unit 100 is operating within its design boundaries. The ramping of the compressor may be fixed to a predetermined value, e.g. 50% (the value may vary based on the particular cooling unit 100 considered). The condensing temperature may be increased to a predetermined value, e.g., 50°C (this value may vary based on the particular cooling unit 100 considered). The cooling unit 100 may be left to operate until it is operating in steady state. This may be determined based on there being no oscillation bigger than a defined threshold for a given time window.

With the cooling unit operating in steady state, one or more parameters or variables of the cooling unit 100 may be determined. These may include one or more of suction pressure, suction temperature, superheat, condensing pressure, condensing temperature, subcooling, ambient temperature, compressor ramping, evaporator fan ramping, condenser fan ramping, EEV position and/or level reading from a level sensor. The reference value referred to in step 308 above may comprise any one or more of these parameters or variables. In other words, the reference value may be a measurement or determination based on steady state or baseline or benchmark or standard (without leaks) operation of the cooling unit 100. The reference value may be stored in a storage device, e.g., a computer memory.

Referring to the steps 302-306 set out above, these may be performed according to an online procedure. This may be performed periodically in an automatic manner, e.g., according to an algorithm. The online procedure may comprise determining one or more current parameters for the cooling unit 100, which can then be compared against corresponding parameters from the baseline procedure. The online procedure may be performed at a time or times for which the required cooling is likely to be low and/or stable. For example, the online procedure may be performed at night since it is more manageable to maintain the required condensing temperature at night.

A check may be performed to determine if the cooling units 100 are active. A check may be performed to determine if/that none of the cooling units 100 are exhibiting errors or undergoing maintenance. A check may be performed to determine if the total cooling capacity of the cooled site (e.g., the data centre) can be covered with no issue. For example, it may be determined whether the cooling capacity of the plurality of cooling units 100 is above the total required cooling by at least a threshold amount or a threshold percentage.

The leak detection techniques described herein may be performed in response to a determination that one or more of the above-mentioned checks are satisfied. For the above-mentioned checks, different safety levels may be considered, which may be dependent on how critical it is to maintain continuous operation. By way of example, a data centre comprising ten cooling units which are actively delivering cooling may be considered.

For a maximum safety level, the leak detection techniques may be performed in response to a determination that nine of the cooling units could satisfy the cooling demand of the ten previously active units plus a safety threshold of cooling demand. For a normal/medium safety level, the leak detection techniques may be performed in response to a determination that the nine cooling units could satisfy the cooling demand of the ten previously active units (without considering any safety threshold or any cooling capacity of the tenth cooling unit). For a minimum safety level, the leak detection techniques may be performed in response to a determination that a maximum cooling capacity of the nine cooling units plus a cooling capacity provided by the tenth cooling unit while it is operating according to the adjusted operation could satisfy the cooling demand.

While cooling units in data centre environments are referred to in most detail in the current disclosure, it will be appreciated that this is merely by way of illustrative example and that the features and techniques of the present disclosure are applicable to any suitable environments and any suitable buildings to be cooled. For example, the cooling system and cooling units of the present disclosure may be provided in commercial environments, retail environments, office environments, industrial environments, etc.. Any of these environments may have cooling systems comprising multiple cooling units and as such may benefit from the improved leak detection and improved reliability of cooling provided by the features and techniques described herein.

One of the cooling units 100 (referred to as a 'first cooling unit' below) may be excluded from the coordinated or teamwork operation of the plurality of cooling units 100 for the duration of a test of the first cooling unit 100. The operation of the first cooling unit 100 may be adjusted or modified such that its operation corresponds to its operation during the baseline procedure described above. In other words, one or more control parameters of the one of the cooling units 100 may be adjusted such that they correspond to the control parameters used during the baseline procedure, and/or such that operation of the cooling unit 100 corresponds to its operation during the baseline procedure (when the reference value was determined for that cooling unit 100).

This adjustment may comprise adjusting the evaporator fan 102 of the one of the cooling units 100 (e.g. increasing or decreasing its speed) such its operation corresponds to its operation during the baseline procedure/such that operation of the first cooling unit 100 on the low pressure side at the bottom of Figure 1 corresponds to its operation in this region during the baseline procedure. This may comprise the cooling unit 100 having the same suction pressure as during the baseline procedure. Alternatively, or in addition, this adjustment may comprise adjusting operation of the condenser 106 of the first cooling unit 100 to adjust the condensing temperature to the value used during the baseline procedure. This may comprise the condensing pressure corresponding to the condensing pressure used during the baseline procedure.

While the first cooling unit is operating according to the adjusted operation, the operation of one or more of the other cooling units 100 of the plurality of cooling units 100 may be adjusted or may operate in an adjusted manner to compensate for this. For example, one or more of the other cooling units 100 may be ramped up to deliver increased cooling and/or air delivery to compensate for a reduction in cooling and/or air delivery by the first cooling unit 100 being tested. Alternatively, if the testing comprises the cooling and/or air delivery of the first cooling unit 100 increasing, one or more of the other cooling units 100 may be ramped down to deliver decreased cooling and/or air delivery to compensate for this. In other words, operation of the remaining cooling units 100 is adjusted so as to avoid an interruption in cooling delivery or a deviation of the cooling delivery from the cooling that is required.

Following adjustment of the operation of the first cooling unit 100, the first cooling unit 100 may be left to stabilise, i.e., left to reach steady state operation. Following this, at least one parameter of the first cooling unit 100 may be determined. The at least one parameter may comprise one or more of the parameters or variables determined during the baseline procedure described above. At least one corresponding parameter may be determined during the baseline procedure and during the online procedure, such that like may be compared to like. The one or more parameters may be stored in a storage device, e.g., a computer memory.

The at least one parameter may be compared to the reference value, as set out in step 308 above. This may be performed while the one of the cooling units 100 is operating according to the adjusted operation, or after it has returned to its standard operation according to the coordinated operation of the plurality of cooling units 100. Each of the one or more parameters determined during the online procedure may be compared to a respective reference value that corresponds thereto (i.e. describing the same physical quantity and/or same component of the first cooling unit 100).

The difference between the parameter and the reference value may be compared to a predetermined threshold. The threshold may be an absolute quantity or a percentage. The threshold may be different for different reference values/parameters, i.e. be different depending on which physical quantity and/or which component of the first cooling unit 100 they describe. The comparison may be made for each parameter and corresponding reference value in turn.

If the difference is higher than the predetermined threshold, a predetermined action may be taken. For example, a warning message may be generated and may be displayed to an engineer. This may indicate the presence of a leak in the first cooling unit 100. In response to the difference being higher than the predetermined threshold, in some examples the first cooling unit 100 may not return to its operation according to the coordinated operation of the plurality of cooling units 100, and the remaining cooling units 100 may continue to provide the required cooling without the first cooling unit 100 thereafter. The first cooling unit 100 may be pumped down. In other examples, the first cooling unit 100 may return to its operation according to the coordinated operation, but the warning may be logged for removal of the first cooling unit 100 from the coordinated operation if at least a predetermined number of warnings are generated for the cooling unit 100, for example in a predetermined time period.

Alternatively, if the difference is lower than (or equal to) the predetermined threshold, the first cooling unit 100 may be returned to the coordinated operation of the plurality of cooling units 100. The remaining cooling units 100 may readjust their operation to deliver the requested cooling capacity together with the first cooling unit 100.

The plurality of cooling units 100 may be left to stabilise, including ramping up or down of respective cooling units 100 to deliver the requested cooling capacity between them. Following this, the above-mentioned online procedure may be repeated for one or more other cooling units 100 of the plurality of cooling units 100. While a second (and third, fourth, etc) cooling unit 100 is being tested according to its own online procedure, the first cooling unit 100 may be among the remaining cooling units 100 which compensate for the cooling unit 100 currently being tested, for example by providing additional cooling.

The techniques of the present disclosure advantageously provide a non-invasive way of performing a self-check on a particular cooling unit 100. For a cooling unit 100 comprising multiple circuits, these techniques may be performed in respect of a particular one of these circuits in turn. These techniques enable improved localisation of any determined leak, which may enable the leak to be identified and fixed more quickly and with reduced loss of refrigerant.

The techniques of the present disclosure enable determination of any deviation of a cooling unit 100 from baseline operation in a quantified way which may be particularly sensitive to identifying the potential presence of a leak. The use of a threshold for comparing the at least one parameter and the reference value enables the sensitivity of the described leak detection to be configured as desired. For example, in some settings it may be desirable to set a low threshold to enable the fastest possible identification of a leak. In other settings, it may be desirable to set a higher threshold to avoid potential false positives in leak detection and maintain operation of the greatest possible number of cooling units 100 for as much time as possible.

The techniques of the present disclosure provide advantageous combination of simultaneously enabling determination of the presence of a leak and continuing to provide the cooling capacity required, i.e.

avoiding negative effects on the cooling delivered. In particular, since the remaining cooling units 100 are configured to cover the total cooling capacity while one of the cooling units 100 is being tested, the impact on the data centre is negligible. There is no penalty associated with adjusting operation of a particular cooling unit 100 to check for a leak because there is no interruption in the cooling delivered. As such, leak detection need not performed only when there is a suspicion that a leak is present, but can be performed periodically and automatically so as to detect any leaks earlier. Such regular and pre-emptive leak detection enables provision of a more reliable and more robust cooling system 200.

The cooling system controller 220 may send commands to individual cooling unit controllers 120 of respective cooling units 100 to begin adjusted operation and/or begin compensating for adjusted operation of another cooling unit 100 as appropriate. These commands may be generated and/or sent according to a predefined schedule included in a memory of the cooling system controller 220. Alternatively, such commands may be generated and/or sent by a particular cooling unit controller 120 of a particular cooling unit 100 designated as a 'master' cooling unit 100. Such commands may be initiated by an engineer, for example if it is desired to perform additional checks on one or more of the cooling units 100.

The techniques of the present disclosure are generally applicable to various different determined parameters and reference values. The parameters and reference values may comprise one, multiple or all of the examples set out below. The use of particular parameters and reference values may be adapted to the particular components and sensors included in a particular type of cooling unit 100 or cooling system 200.

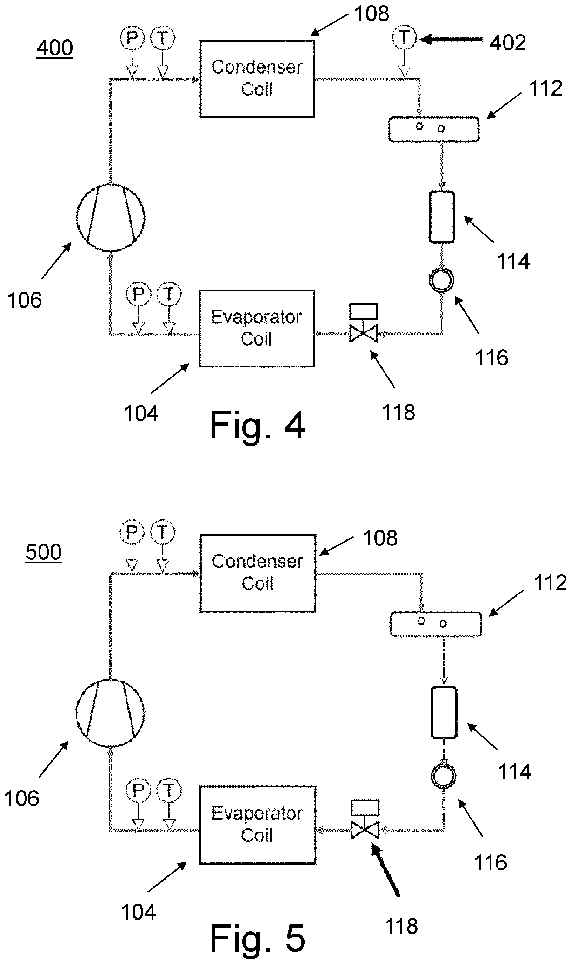

In a first example, the leak detection may comprise a determination of subcooling. Figure 4 depicts an example cooling unit 400 which may be used to determine subcooling. The cooling unit 400 may comprise corresponding features to cooling unit 100 described in relation to Figure 1.

Subcooling refers to the liquid refrigerant having a temperature below the boiling point of the refrigerant. The amount of subcooling of the refrigerant may refer to how far its temperature is below the boiling point of the refrigerant. In particular, the temperature here may refer to the temperature of the refrigerant just after it has passed through the condenser 108.

A reference value for the subcooling of refrigerant in the cooling unit 100 may be determined, which may be performed using the baseline procedure described above. Typical values for subcooling may be 2K (i.e. 2 degrees Kelvin) or greater. The subcooling may be measured using the temperature sensor 402, which may be configured to determine the temperature of the refrigerant after it has left the condenser 108 (and before it has entered another component other than a pipe or conduit). The boiling point of the refrigerant may be known from reference tables or may be determined experimentally. The subcooling of the refrigerant may be calculated by subtracting the temperature measured by the temperature sensor 402 from the known boiling point of the refrigerant.

According to the online procedure described above, operation of the cooling unit 100 may be adjusted such that its operation corresponds to its operation during the baseline procedure described above. This may comprise modifying the evaporator 104 pressure such that it corresponds to the evaporator 104 pressure during the baseline procedure. The evaporator 104 pressure may be kept at this constant value, for example by modifying the evaporator fan 102 (see Figure 1) or compressor 106 speed to achieve this. The condensing pressure of the condenser 108 may be kept at a constant value by adjusting the speed of the condenser fan 110 (see Figure 1).

During the online procedure, the subcooling may again be measured using the temperature sensor 402. In other words, the subcooling may again be determined by subtracting the temperature measured by the temperature sensor 402 from the known boiling point of the refrigerant. The subcooling determined in this manner is an example of the at least one parameter of the cooling unit 100 that is determined while the cooling unit 100 is operating according to the adjusted operation associated with the online procedure.

The subcooling determined during the online procedure (i.e. the at least one parameter) may be compared to the subcooling determined during the baseline procedure (i.e. the reference value). This may comprise subtracting either one of the parameter and the reference value from the other (or alternatively dividing either one of the parameter and the reference value by the other). If the subcooling determined during the online procedure is lower than the subcooling determined during the baseline procedure, this indicates that the amount of refrigerant being circulated has reduced such that there may be a leak in the cooling unit 100.

In a second example, the leak detection may comprise a determination of expansion valve position, for example a determination of electronic expansion valve (EEV) position. Figure 5 depicts an example cooling unit 500 which may be used to determine EEV position. The cooling unit 500 may comprise corresponding features to cooling unit 100 described in relation to Figure 1.

Superheating refers to the refrigerant in gas form having a temperature above the boiling point of the refrigerant. The amount of superheating of the refrigerant may refer to how far its temperature is above the boiling point of the refrigerant. In particular, the temperature here may refer to the temperature of the refrigerant just after it has passed through the evaporator 104.

The EEV 118 may be configured to open or close to an extent which allows enough refrigerant to pass therethrough such that the superheating of the refrigerant after passing through the evaporator 104 is close to a setpoint, i.e. close to a predetermined/desired amount of superheating. In other words, the EEV 118 provides means for controlling the amount of superheating of the refrigerant. If the EEV 118 is having to open to a larger extent to maintain a flow of refrigerant that results in this desired amount of superheating, this indicates that the overall amount of refrigerant in the cooling unit 100 is lower than previously.

A reference value for the EEV 118 position may be determined, which may be performed using the baseline procedure described above. The EEV 118 may provide an electronic readout of the valve position, for example to the corresponding cooling unit controller 120 or cooling system controller 220, or via an incorporated or communicatively coupled display. Other types of valves may communicate the valve position in a corresponding way, or this may be determined in alternative ways, for example via manual inspection or measuring.

During the online procedure, the EEV 118 position may again be determined as another example of the at least one parameter of the cooling unit 100 that is determined while the cooling unit 100 is operating according to the adjusted operation associated with the online procedure. For this, operation of the cooling unit 100 may be adjusted such that its operation corresponds to its operation during the baseline procedure described above.

The EEV 118 position determined during the online procedure may be compared to the EEV 118 position determined during the baseline procedure. If this indicates that the EEV 118 position during the online procedure is such that the valve is more open than during the baseline procedure, this indicates that the amount of refrigerant being circulated has reduced such that there may be a leak in the cooling unit 100.

Due to an interconnected relation between the EEV 118 and the compressor 106 ramping during cooling delivery, as an alternative or in addition to consideration of the increase of the opening of the EEV 118, a compressor 106 ramping increase could also be determined to indicate the presence of a leak as described herein. In other words, a current, increased amount of compressor 106 ramping may be used as a parameter that is compared to a reference value for the compressor 106 ramping. This may serve as a double checking mechanism, which would yield higher confidence in leak detection.

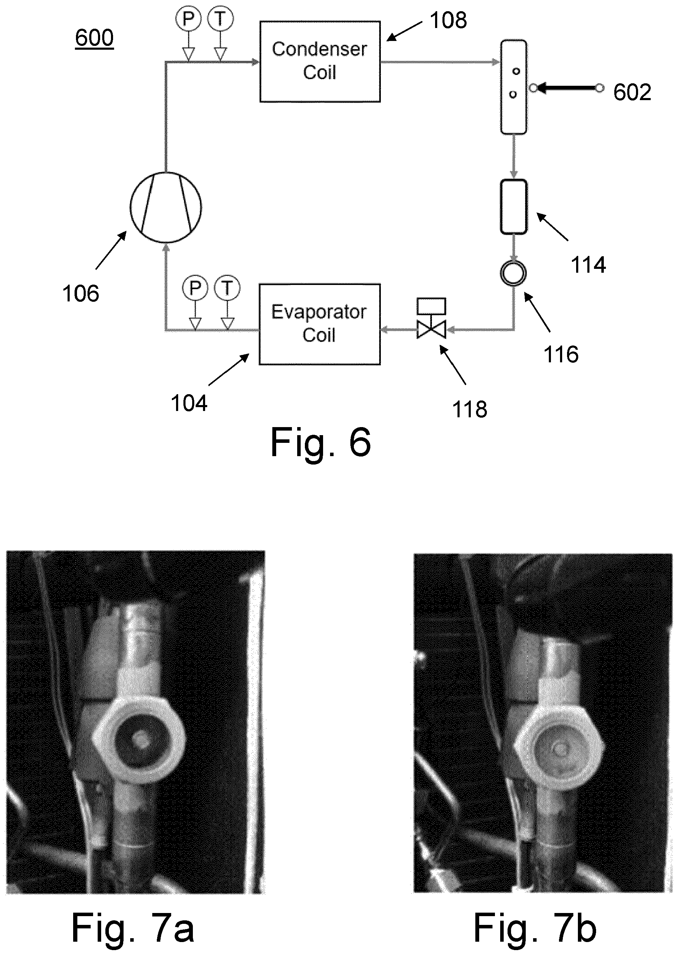

In a third example, the leak detection may comprise a determination of a level of liquid refrigerant in a receiver. Figure 6 depicts an example cooling unit 600 which may be used to determine EEV position. The cooling unit 600 may comprise corresponding features to cooling unit 100 described in relation to Figure 1.

The receiver 602 depicted in Figure 6 may be present instead of the receiver 112 depicted in Figure 1. In particular, while the receiver 112 is oriented horizontally, the receiver 602 is oriented vertically. In other words, the dimensions of the receiver 602 are such that it is longer in a vertical direction than in a horizontal direction. In other words, it is longer in a direction of refrigerant flow than in a direction perpendicular to this.

The receiver 602 may comprise a level sensor, or a level sensor may be attached to, included in or directed at the receiver 602. The level sensor may be configured to determine the level of refrigerant in the receiver 602, i.e. the height of the top surface of the refrigerant in the receiver 602. As would be understood by the skilled person, a level sensor may be implemented in various different ways, including as a capacitive, magnetic or ultrasonic sensor. Orienting the receiver 602 vertically makes the measurements of the level sensor more sensitive to changes in the amount of refrigerant present because, with this orientation, a particular change in volume of refrigerant will lead to a larger change in height of the top surface of the refrigerant. Advantageously, the diameter of the receiver in the horizontal direction is made to be as small as possible in order to increase the accuracy of the measurements of the level sensor.

In a corresponding manner to that described in the preceding examples, a reference value for the refrigerant level 602 may be determined using the baseline procedure described above. The level sensor may provide an electronic readout of the refrigerant level position, for example to the corresponding cooling unit controller 120 or cooling system controller 220, or via an incorporated or communicatively coupled display. During the online procedure, the refrigerant level may again be determined as another example of the at least one parameter of the cooling unit 100 that is determined while the cooling unit 100 is operating according to the adjusted operation associated with the online procedure. For this, operation of the cooling unit 100 may be adjusted such that its operation corresponds to its operation during the baseline procedure described above.

The refrigerant level determined during the online procedure may be compared to the refrigerant level determined during the baseline procedure. If this indicates that the refrigerant level during the online procedure is lower than during the baseline procedure, this indicates that the amount of refrigerant being circulated has reduced such that there may be a leak in the cooling unit 100.

In a fourth example, the leak detection may comprise a determination of the presence of bubbles on the sight glass 116 (see Figure 1). If the subcooling of the refrigerant is small, it may be difficult to accurately determine a difference between the subcooling during the baseline procedure and the subcooling during the online procedure. An evaluation of the amount of bubbles on the sight glass 116 can provide an additional check to address this. Figures 7a and 7b each depict the sight glass 116 in the centre of the images. In Figure 7a, the sight glass 116 is clear, whereas in Figure 7b the sight glass 116 is clouded or blurry due to the presence of bubbles on the interior surface of the sight glass 116.

A camera may directed to view the sight glass 116, and may be communicatively coupled to the corresponding cooling unit controller 120 or to the cooling system controller 220. One or more of the camera, the cooling unit controller 120 and/or the cooling system controller 220 may comprise image analysis software configured to detect the presence of bubbles on the sight glass 116, for example by determining the brightness of the image or detecting the outlines of bubbles in the image.

An increased amount of bubbles 116 on the sight glass can indicate that some of the refrigerant is still in the form of gas after passing through the condenser 108 / can indicate a lower amount of subcooling. This in turn indicates a lower amount of refrigerant in the cooling unit 100. For example, Figure 7a may depict the sight glass 116 during the baseline procedure and Figure 7b may depict the sight glass 116 during the online procedure. The increased amount of bubbles in Figure 7b relative to Figure 7a may indicate that the amount of refrigerant being circulated has reduced such that there may be a leak in the cooling unit 100.

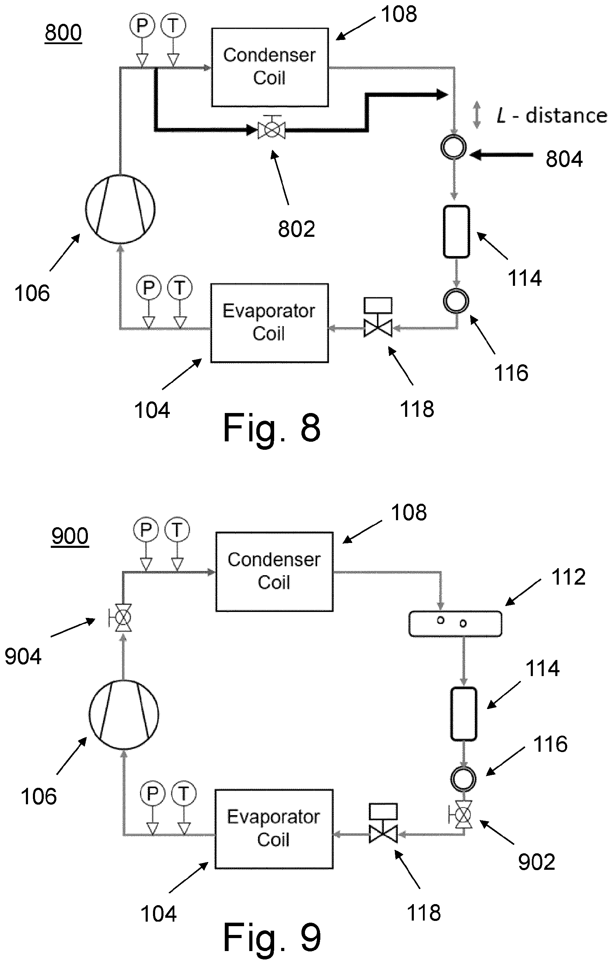

In a fifth example, the leak detection may comprise the detection of bubbles on an additional sight glass. As such, the fifth example may be considered to be a modified version of the fourth example. Figure 8 depicts an example cooling unit 800 which may be used for this detection of bubbles according to the fifth example. The cooling unit 800 may comprise corresponding features to cooling unit 100 described in relation to Figure 1.

The cooling unit 800 comprises a bypass of the condenser 108. The cooling unit 800 may not comprise a receiver 112 (see Figure 1). The bypass comprises a valve 802, e.g. a solenoid valve, and a capillary through which the refrigerant may flow around, i.e. in parallel to, the condenser 108. If the cooling unit 100 has normal (high) subcooling, gas may flow through the bypass and mix with liquid refrigerant on the other side of the condenser 108, causing the gas to condensate. An additional sight glass 804 is disposed in the cooling unit 100 after the gas and liquid meet, i.e. after the bypass, condenser 108 and valve 802. The sight glass 804 may be disposed a distance L from a point at which the conduit from the condenser 108 and the bypass comprising the valve 802 meet, i.e. at a distance L after this point in the direction of refrigerant flow. The additional sight glass 804 may be used to determine whether the condensed refrigerant is cool enough to make the gas condensate such that there are no bubbles visible on the additional sight glass 804. If this is not the case, bubbles will form on the interior surface of the additional sight glass 804. This may indicate that the amount of refrigerant being circulated has reduced such that there may be a leak in the cooling unit 100. The evaluation of the amount of bubbles may be performed using the camera and/or image analysis software in a corresponding manner to that described about in relation to the fourth example. The amount of bubbles may be determined for the baseline procedure to determine the reference value and for the online procedure to determine the at least one parameter, and the reference value and the at least one parameter may be compared as described above.

In a sixth example, the leak detection may comprise a determination of temperature and/or pressure during or following a pump down procedure. While the first to fifth examples described above may allow the cooling unit 100 to continue to deliver cooling (in an adjusted manner), during the leak detection according to the sixth example, the cooling unit 100 would not be able to deliver any cooling.

Figure 9 depicts an example cooling unit 900 which may be used for this determination of temperature and/or pressure according to the sixth example. The cooling unit 900 may comprise corresponding features to cooling unit 100 described in relation to Figure 1. The cooling unit 900 comprises a liquid-side valve 902 and a gas-side valve 904. The liquid-side valve 902 may be disposed in the refrigerant circuit between the sight glass 116 and the expansion valve 118. The gas-side valve may be disposed in the refrigerant circuit between the compressor 106 and the condenser 108. Each of the liquid-side valve 902 and the gas-side valve 904 may respectively be an EEV valve, a solenoid valve, or any other suitable type of valve, and may be configured to control the flow of refrigerant therethrough.

According to the sixth example, the liquid-side valve 902 may be closed and all possible refrigerant may be sucked from the evaporator side of the refrigerant circuit (i.e. the portion of the refrigerant circuit including and close to the evaporator 104). The compressor 106 may be turned off, the evaporator fan 102 (see Figure 1) may be turned off, and the condenser fan 110 (see Figure 1) may be turned off. Following these steps, all the refrigerant should be in the condenser side of the refrigerant circuit (i.e. the portion of the refrigerant circuit including and close to the condenser 108).

The external temperature (e.g. a temperature measured on the condenser side/in the outside environment outside the buildings making up the data centre) may be compared to a temperature computed based on the pressure reading on the condenser side of the cooling unit 900. This pressure reading may be determined using a pressure sensor located on the condenser side of the cooling unit 900. If a temperature reading on the condenser side is considered directly, such a reading may decrease over time not due to a leak, but due to the refrigerant converging to the external temperature. However, since there is no refrigerant flow, the pressure of the refrigerant will equalise to the temperature of the refrigerant. As would be understood by the skilled person, conversion between the pressure reading and the equivalent temperature may be performed using known curves relating temperature to pressure. These may take the form of polynomials stored in or accessible by a controller 120, 220. In this manner, the temperature computed based on this pressure reading may be determined and may be compared to the external temperature. This comparison should be performed while the external temperature is relatively constant, for example at night. If the external temperature is constant and the pressure on the condenser side (or the temperature computed based on this pressure) is decreasing, this may indicate a leak in the cooling unit 100 on the condenser side.

The internal temperature (e.g. a temperature measured for the evaporator side inside the buildings making up the data centre) may be compared to a temperature computed based on a pressure reading on the evaporator side (i.e. the suction side) of the cooling unit 900. This pressure reading may be determined using a pressure sensor located on the gas side of the cooling unit 900, and a temperature may be computed therefrom in a corresponding manner to that described above for the condenser side of the cooling unit 900. A change in this pressure reading may indicate a leak, depending on the level of vacuum it was possible to achieve on the evaporator side of the cooling unit 900. For example, if it was possible to decrease the suction pressure to 2 bars, and after closing the valve 902 the pressure still decreases, this may indicate that there is a leak on the evaporator side. If it was possible to decrease the suction pressure below 1 bar, and after closing the valve 902 the pressure increases, this may indicate that there is a leak on the suction side.

According to the sixth example, the reference value may comprise the external temperature measurement and the at least one parameter may comprise the temperature computed based on the pressure reading on the condenser side of the cooling unit 100. According to the sixth example, the reference value may comprise the internal temperature and the at least one parameter may comprise the temperature computed based on the pressure reading on the evaporator side of the cooling unit 100. According to the sixth example, the reference value may comprise the suction pressure it was possible to decrease the evaporator side to, and the at least one parameter may comprise the pressure of the evaporator side at a later time. According to the sixth example, it may be possible to localise a leak to either the condenser side or the evaporator side of the cooling unit 900.

Any of the leak detection techniques set out in the present disclosure may be performed alone or in combination. As such, any of the components in Figures 4-9 may be combined with each other and/or with features of Figure 1 or Figure 2. The total number of leak detection techniques used, and which particular leak detection techniques are used, may be selected based on the configuration of the cooling units 100, the configuration of the cooling system 200, the equipment to be cooled, and/or user preference. The higher the number of leak detection techniques that are used, the higher the confidence in determining the presence of a leak.

In order to ensure high confidence that a leak is present and lower the risk of a false alarm, a summing logic may be used as set out below. For n leak detection techniques (n being an integer), each technique may be assigned a weight w based on its sensitivity and precision. By way of example, the sum of the weights w may add up to 1:

$$\sum_{i=1}^{n} w_i = 1$$

The output or result for each of the n leak detection methods may be referred to as r, and may be a binary indication for which r is equal to 1 if a leak is present and equal to 0 if a leak is not present. A confidence threshold may be defined (e.g. with a value between 0 and 1). For a value calculated by multiplying each of the weights w by the respective outputs r, summed over all the n leak detection methods, if this value is above a particular confidence threshold, a predefined action may be performed with respect to the cooling unit 100. This is summarised using the equation:

$$\sum_{i=1}^{n} w_i r_i \geq confidence\ threshold$$

A non-limiting numerical example is provided below for the purposes of illustration. Consider that five leak detection techniques are used (the number used could be lower or higher in different examples) and that their weights are equal (the weights could be different in different examples). As such, the weight w for each of the n techniques is equal to 0.2. We can then define different confidence thresholds 0.2, 0.4, 0.6, etc:

$$\sum_{i=1}^{n} w_i n_i \leq 0.2$$

$$0.2 < \sum_{i=1}^{n} w_i n_i \leq 0.4$$

$$0.4 < \sum_{i=1}^{n} w_i n_i \leq 0.6$$

$$0.6 < \sum_{i=1}^{n} w_i n_i$$

In the first, case (value $\leq 0.2$), only one of the techniques indicated the presence of a leak. The predefined action in this case may be to keep monitoring the cooling unit 100 periodically, but not to take further action.

In the second case (value $\leq 0.4$), two of the techniques indicated the presence of a leak. The predefined action in this case may be to generate and/or communicate a warning indicating a possible leak.

In the third case (value $\leq 0.6$), three of the techniques indicated the presence of a leak. The predefined action may be to generate and/or communicate an alarm indicating a possible leak. The alarm may be configured to be more noticeable than the warning. For example, the alarm may be larger/brighter than the warning when displayed visually, and/or may be louder than the warning when communicated audibly, and/or may be distributed to more people/systems.

In the fourth case (value > 0.6), four or five of the techniques indicated the presence of a leak. The predefined action may be initiation of a safety routine for the cooling unit 100. For example, the cooling unit 100 may be turned off. In the fourth case, the alarm may also be generated and/or communicated as in the third case. If one or more of the detection techniques indicate a particular location of the leak within the cooling unit 100, a specific action may be initiated in response. For example, if a leak in the evaporator side is indicated, the compressor 106 may be used to suck all the refrigerant to the condenser side, which would prevent further refrigerant loss.

It will be appreciated that other numbers of techniques, weights, confidence thresholds and predefined actions may be used as appropriate.

The techniques of the present disclosure enable quantified and cooling unit specific detection of leaks and therefore improve the accuracy of leak detection and reduce the loss of refrigerant through leaks. In addition, the techniques of the present disclosure enable this leak detection to be performed without disruption to the total cooling provided by the cooling system, thereby improving the reliability of the cooling system. In addition, the techniques of the present disclosure are modular and customisable depending on the types of cooling units operated and the required levels of confidence, thereby improving the versatility of the leak detection.

While the methods disclosed herein are presented in a certain sequential order, this should not be taken to limit the methods to the orders presented. One or more of the method steps may be omitted or rearranged. The various steps may be performed in different orders. Various steps may be performed at the same time or substantially the same time. Herein, references to events occurring substantially at the same time may refer to events at least partially overlapping in time and/or events occurring at the same time within measurement uncertainties.

The cooling unit(s), cooling system and/or controller(s) described herein may be configured to perform any of the method steps presently disclosed and may comprise computer executable instructions which, when executed by a processor cause the processor to perform any of the method steps presently disclosed, or when executed by the controller(s) cause the controller(s) to perform any of the method steps presently disclosed, or when executed by the cooling unit(s)/cooling system, cause the cooling unit(s)/cooling system to perform any of the method steps presently disclosed. Any of the steps that the cooling unit(s), cooling system and/or controller(s) are configured to perform may be considered as method steps of the present disclosure and may be embodied in computer executable instructions for execution by a processor. A computer-readable medium may comprise the above-described computer executable instructions.

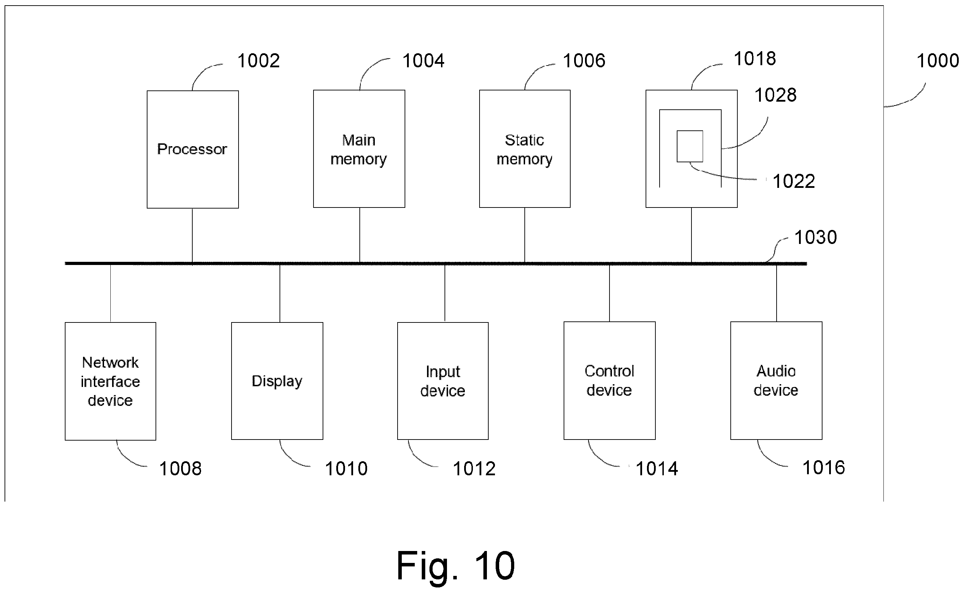

Figure 10 illustrates a block diagram of one implementation of a computing device 1000 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein. The computing device 1000 may correspond to the one or more of the cooling unit controllers 110 and/or the cooling system controller 220 as described herein.

The example computing device 1000 includes a processing device 1002, a main memory 1004 (e.g., read-only memory (ROM), flash memory, dynamic random access memory (DRAM) such as synchronous DRAM (SDRAM) or Rambus DRAM (RDRAM), etc.), a static memory 1006 (e.g., flash memory, static random access memory (SRAM), etc.), and a secondary memory (e.g., a data storage device 1018), which communicate with each other via a bus 1030.

Processing device 1002 represents one or more general-purpose processors such as a microprocessor, central processing unit, or the like. More particularly, the processing device 1002 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 1002 may also be one or more special-purpose processing devices such as an application specific integrated circuit (ASIC), a field programmable gate array (FPGA), a digital signal processor (DSP), network processor, or the like. Processing device 1002 is configured to execute the processing logic (instructions 1022) for performing the operations and steps discussed herein.

The computing device 1000 may further include a network interface device 1008. The computing device 1000 also may include a video display unit 1010 (e.g., a liquid crystal display (LCD) or a cathode ray tube (CRT)), an alphanumeric input device 1012 (e.g., a keyboard or touchscreen), a cursor control device 1014 (e.g., a mouse or touchscreen), and an audio device 1016 (e.g., a speaker).

The data storage device 1018 may include one or more machine-readable storage media (or more specifically one or more non-transitory computer-readable storage media) 1028 on which is stored one or more sets of instructions 1022 embodying any one or more of the methodologies or functions described herein. The instructions 1022 may also reside, completely or at least partially, within the main memory 1004 and/or within the processing device 1002 during execution thereof by the computer system 1000, the main memory 1004 and the processing device 1002 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as " receiving", "determining", "comparing ", "enabling", "maintaining," "identifying," "adjusting, " "transmitting," "generating," "operating," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The approaches described herein may be embodied on a computer-readable medium, which may be a non-transitory computer-readable medium. The computer-readable medium may carry computer-readable instructions arranged for execution upon a processor so as to cause the processor to carry out any or all of the methods described herein.

The term "computer-readable medium" as used herein refers to any medium that stores data and/or instructions for causing a processor to operate in a specific manner. Such storage medium may comprise non-volatile media and/or volatile media. Non-volatile media may include, for example, optical or magnetic disks. Volatile media may include dynamic memory. Exemplary forms of storage medium include, a floppy disk, a flexible disk, a hard disk, a solid state drive, a magnetic tape, or any other magnetic data storage medium, a CD-ROM, any other optical data storage medium, any physical medium with one or more patterns of holes, a RAM, a PROM, an EPROM, a FLASH-EPROM, NVRAM, and any other memory chip or cartridge.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

**Claims**

1. A method for detecting a leak in a cooling system comprising a plurality of cooling units, the method comprising:

   adjusting operation of a first cooling unit of the plurality of cooling units;
   while the first cooling unit is operating according to the adjusted operation:

      determining at least one parameter of the first cooling unit; and
      operating at least one other cooling unit of the plurality of cooling units to compensate for the adjusted operation of the first cooling unit; and

   comparing the at least one parameter to a reference value.

2. A method according to claim 1, comprising comparing a difference between the at least one parameter and the reference value to a threshold.

3. A method according to claim 2, comprising, if the difference is greater than the threshold, generating a warning, generating an alarm, or powering off the first cooling unit.

4. A method according to claim 2, comprising, if the difference is smaller than the threshold, returning the first cooling unit to normal operation and returning the at least one other cooling unit to normal operation.

5. A method according to any preceding claim, wherein the reference value is determined during a baseline procedure and the at least one parameter is determined during an online procedure, the method comprising operating the first cooling unit during the online procedure in a corresponding manner to during the baseline procedure.

**6.** A method according to claim 5, wherein the at least one parameter comprises a subcooling of the first cooling unit during the online procedure and the reference value comprises a subcooling of the first cooling unit during the baseline procedure.

**7.** A method according to claim 5 or claim 6, wherein the at least one parameter comprises a position of an expansion valve of the first cooling unit during the online procedure and the reference value comprises a position of the expansion valve during the baseline procedure.

**8.** A method according to any of claims 5-7, wherein the at least one parameter comprises a level of refrigerant in a vertical receiver of the first cooling unit during the online procedure and the reference value comprises a level of refrigerant in the vertical receiver during the baseline procedure.

**9.** A method according to any of claims 5-8, wherein the at least one parameter comprises an amount of bubbles on a sight glass of an expansion valve of the first cooling unit during the online procedure and the reference value comprises an amount of bubbles on the sight glass during the baseline procedure; and/or
wherein the at least one parameter comprises an amount of bubbles on a second sight glass of the first cooling unit during the online procedure and the reference value comprises an amount of bubbles on the second sight glass during the baseline procedure, the second sight glass being disposed to receive liquid refrigerant from a condenser of the first cooling unit and gas from a bypass of the condenser.

**10.** A method according to any preceding claim, comprising removing refrigerant from the first cooling unit and turning off one or more components of the first cooling unit, wherein the at least one parameter comprises a temperature computed from an internal pressure measurement of the first cooling unit and the reference value comprises an external temperature measured outside the first cooling unit.

**11.** A method according to any preceding claim, comprising:

determining a plurality of parameters of the first cooling unit; and
comparing each of the plurality of parameters to a respective reference value.

**12.** A method according to claim 11, comprising:

for each of the plurality of parameters, quantifying the result of the comparing and weighting the quantified result of the comparing;

summing the weighted and quantified results of the comparing to determine a leak detection value; and
comparing the leak detection value to at least one confidence threshold, each confidence threshold associated with a respective predetermined action.

**13.** A method according to any preceding claim, comprising:

adjusting operation of a second cooling unit of the plurality of cooling units;
while the second cooling unit is operating according to the adjusted operation:

determining at least one parameter of the second cooling unit; and
operating at least one other cooling unit of the plurality of cooling units to compensate for the adjusted operation of the second cooling unit; and

comparing the at least one parameter to a reference value.

**14.** A control device comprising a processor and a memory storing computer-executable instructions, the instructions when executed causing the processor to perform the method of any preceding claim.

**15.** A cooling system comprising:

the control device of claim 14; and
the plurality of cooling units.

**100**

Fig. 1

Fig. 2

300

302
Adjust operation of a first cooling unit of the
plurality of cooling units

304
While the first cooling unit is operating
according to the adjusted operation, determine
at least one parameter of the first cooling unit

306
While the first cooling unit is operating
according to the adjusted operation, operate at
least one other cooling unit of the plurality of
cooling units to compensate for the adjusted
operation of the first cooling unit

308
Compare the at least one parameter to a
reference value

Fig. 3

Fig. 4

Fig. 5

Fig. 6

Fig. 7a

Fig. 7b

Fig. 8

Fig. 9

Fig. 10

Europäisches
Patentamt

European
Patent Office

Office européen
des brevets

# EUROPEAN SEARCH REPORT

**Application Number**

EP 24 16 6513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 954 127 A (CHRYSLER GREGORY M [US] ET AL) 21 September 1999 (1999-09-21) | 1-5, 13-15 | INV. F25B49/00 |
| Y | * column 5, paragraph 66 - column 12, line 34; figures 1-13 * | 6-12 | F25B49/02 |
| X | JP 2001 085883 A (FUJI ELECTRIC CO LTD) 30 March 2001 (2001-03-30) * paragraph [0018] - paragraph [0028]; figures 1-8 * | 1-5,9, 13-15 | |
| Y | US 2021/207831 A1 (LORD RICHARD G [US] ET AL) 8 July 2021 (2021-07-08) * paragraph [0031] - paragraph [0067]; figures 1-5 * | 6,7,11, 12 | |
| Y | US 2023/349576 A1 (ZHANG YANG [CN]) 2 November 2023 (2023-11-02) * paragraph [0030] - paragraph [0051]; figures 1-3 * | 10 | |
| Y | US 5 974 863 A (PERSSON LARS-ANDERS [SE]) 2 November 1999 (1999-11-02) * column 3, line 9 - column 3, line 24; figures 1,2 * | 9 | **TECHNICAL FIELDS SEARCHED (IPC)** F25B |
| Y | JP 2003 156271 A (MITSUBISHI ELECTRIC CORP) 30 May 2003 (2003-05-30) * paragraph [0007]; figure 10 * | 8 | |

The present search report has been drawn up for all claims

| Place of search | Date of completion of the search | Examiner |
|---|---|---|
| Munich | 18 September 2024 | Szilagyi, Barnabas |

EPO FORM 1503 03.82 (P04C01)

## ANNEX TO THE EUROPEAN SEARCH REPORT
## ON EUROPEAN PATENT APPLICATION NO.

EP 24 16 6513

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2024

| Patent document cited in search report | | Publication date | Patent family member(s) | | Publication date |
|---|---|---|---|---|---|
| US 5954127 | A | 21-09-1999 | US | 5896922 A | 27-04-1999 |
| | | | US | 5934364 A | 10-08-1999 |
| | | | US | 5954127 A | 21-09-1999 |
| JP 2001085883 | A | 30-03-2001 | NONE | | |
| US 2021207831 | A1 | 08-07-2021 | US | 2021207831 A1 | 08-07-2021 |
| | | | WO | 2021050704 A1 | 18-03-2021 |
| US 2023349576 | A1 | 02-11-2023 | CN | 115493250 A | 20-12-2022 |
| | | | US | 2023349576 A1 | 02-11-2023 |
| US 5974863 | A | 02-11-1999 | AT | E216772 T1 | 15-05-2002 |
| | | | AU | 7352696 A | 07-05-1997 |
| | | | EP | 0856150 A1 | 05-08-1998 |
| | | | SE | 507585 C2 | 22-06-1998 |
| | | | US | 5974863 A | 02-11-1999 |
| | | | WO | 9714943 A1 | 24-04-1997 |
| JP 2003156271 | A | 30-05-2003 | JP | 4113700 B2 | 09-07-2008 |
| | | | JP | 2003156271 A | 30-05-2003 |

EPO FORM P0459

For more details about this annex : see Official Journal of the European Patent Office, No. 12/82